# EUROPÄISCHE PATENTSCHRIFT

(11) **EP 0 782 528 B1**
(45) Veröffentlichungstag und Bekanntmachung des Hinweises auf die Patenterteilung: **09.12.1998**
(21) Anmeldenummer: 95934065.4
(22) Anmeldetag: 15.09.1995
(51) Int. Cl.: B65B 51/04, A22C 11/12

(54) **Verfahren und Vorrichtung zum Einbinden eines Etiketts in den Verschluss beim Verschliessen des gerafften Endes einer Vepackungshülle**
Method and device for tying in a label in the closure element sealing off the gathered end of a packaging wrapper
Procédé et dispositif pour relier une étiquette à la fermeture de l'extrémité serrée d'une gaine d'emballage

(30) Priorität: 22.09.1994 DE 9415379 U
(43) Veröffentlichungstag der Anmeldung: 09.07.1997
(73) Patentinhaber: Tipper Tie technopack GmbH, D-21509 Glinde (DE)
(72) Erfinder: PLEWA, Manfred, D-27283 Verden (DE); VON DER HEYDEN, Dieter, D-64367 Mühltal (DE)
(74) Vertreter: Glawe, Delfs, Moll & Partner
(86) Internationale Anmeldenummer: EP9503647
(87) Internationale Veröffentlichungsnummer: WO9609208

(56) Entgegenhaltungen:
- GB-A- 1 100 849
- US-A- 4 044 450

## Beschreibung

Es ist bekannt, den gerafften Strang einer Verpackungshülle, beispielsweise eines Wursthüllenendes, mittels einer U-förmigen Drahtklammer zu verschließen, die um den Strang herumgebogen wird. Die Vorrichtung weist zu diesem Zweck einen Verschließbereich auf, der als Ausschnitt in einer oder mehreren plattenförmigen Elementen gebildet ist, die in den einander gegenüberliegenden Ausschnitträndern Führungsnuten für die Klammerschenkel enthalten, während am Ende des Ausschnitts eine Matrize zum Biegen der Klammerenden vorgesehen ist. Mittels eines Stempels wird die Klammer mit ihrer offenen Seite voran in den Verschließbereich geschoben, in welchem sich der zu verschließende Strang befindet.

Die Bezeichnung des Verpackungsguts findet in der Regel auf der Hülle statt. Es kann auch eine Schnurschlaufe mit in den Verschluß eingebunden werden, die später mit einem Etikett versehen werden kann. Bekannt ist es auch (US-A 4044450, GB-A 1100849), ein streifenförmiges Etikett in die Bewegungsbahn der Klammer zum Verschließbereich einzuführen. Die Klammer nimmt das Etikett mit und bindet es in den Hüllenverschluß ein. Dies funktioniert nur dann befriedigend, wenn das Etikett von der Klammer sicher mitgenommen wird. Da es aber an der Klammer nicht befestigt werden kann und sehr leicht ist, kann es während des Klammervorschubs leicht zur einen oder anderen Seite weggleiten. Seine beiderseits überstehenden Enden müssen daher sehr lang sein, um sicher mitgenommen zu werden. Diese Enden sind am fertigen Produkt häßlich. Wenn das Etikett mit einem Aufdruck versehen ist, läßt sich kaum vorhersagen, an welcher Stelle des schließlich eingebundenen Etiketts der Aufdruck sich im Verhältnis zum Verschluß befinden wird.

Der Erfindung liegt die Aufgabe zugrunde, ein Verfahren und eine Vorrichtung zu schaffen, die diese Nachteile vermeidet. Die erfindungsgemäße Lösung besteht in den Merkmalen der Ansprüche 1 und 8 sowie vorzugsweise auch der übrigen Ansprüche.

Demnach wird das Etikett vor dem Strang in den Verschließbereich mit seinem vorderen, freien Ende eingeführt, wobei sich sein hinteres Ende noch in der Etikettenführung befindet, so daß das Etikett von der Führung gehalten wird. Diese Halterung dauert bis mindestens kurz vor dem Beginn des Verschließvorgangs. Zweckmäßigerweise verbleibt das hintere Ende des Etiketts auch noch während des Verschließvorgangs in der Etikettenführung und wird erst anschließend herausgezogen, wenn der verschlossene Strang der Verpackungshülle aus dem Verschließbereich entfernt wird.

Die Etikettenführung ist so ausgebildet, daß sie bei dem Verschließbereich mündet und ein daraus austretendes Etikettenende in den Verschließbereich gerichtet wird. Es sind Vorschub- und Haltemittel vorgesehen, die dafür sorgen, daß ein vorbestimmter Etikettenabschnitt in den Verschließbereich hineinragt, um mit dem zu verschließenden Strang von der Verschlußklammer erfaßt zu werden, während sein hinteres Ende noch von der Führung gehalten ist. Dadurch wird eine genaue, reproduzierbare Positionierung des Etiketts erreicht. Das vorlaufende, freie, ungestützte Ende des Etiketts wird in einem Zeitpunkt, in den Verschließbereich eingeführt, in welchem es daran nicht durch einen im Verschließbereich befindlichen Strang gehindert werden kann. Nach der Erfindung können deshalb die Mittel zum Vorschub des Etiketts lediglich dann eingeschaltet werden, wenn der Verschließbereich frei ist. Dies wird zweckmäßigerweise durch einen Sensor festgestellt, der die Anwesenheit eines Strangs in dem Verschließbereich feststellt. Es genügt in der Regel auch ein Sensor, der die Entnahme eines Strangs feststellt, weil angenommen werden kann, daß unmittelbar nach der Entnahme eines Strangs der Verschließbereich frei ist. Dazu eignet sich beispielsweise eine Klappe, die auf der Entnahmeseite die Matrize und einen Teil des Verschließbereichs abdeckt und die bei der Entnahme des verschlossenen Strangs aus dem Verschließbereich gegen Federkraft abgehoben wird. Diese Klappenbewegung kann die Entnahme des Strangs der Steuereinrichtung signalisieren und damit den Vorschub eines neuen Etiketts veranlassen. Noch einfacher und deshalb bevorzugt ist eine Ausführungsform, bei welcher der Sensor feststellt, ob sich das hintere Ende des Etiketts in der Etikettenführung befindet. Da das Etikett erst dann aus der Führung entfernt wird, wenn der verschlossene Strang aus dem Verschließbereich entnommen wird, signalisiert die Entfernung des Etiketts aus der Führung, daß der Verschließbereich frei ist. Unmittelbar nach dem Entfernen des Etiketts aus der Führung kann daher ein neues Etikett vorgeschoben werden.

Wenn die Verschließvorrichtung an eine automatische Füllvorrichtung (beispielsweise eine Wurstfüllmaschine) angeschlossen ist und daher ein bestimmter Steuerungsablauf für die Verschließvorrichtung vorgegeben ist, kann der Etikettenvorschub auch in diesen Betriebsablauf derart eingebunden sein, daß er selbsttätig in einer Betriebsphase stattfindet, in der der Verschließbereich frei ist.

Wenn der zu verschließende Strang quer zu seiner Längserstrekkung in den Verschließbereich eingeführt wird, wobei seine Bewegung parallel zu der den Verschließbereich bildenden Platte verläuft, ist nicht zu befürchten, daß das in den Verschließbereich ragende Etikettenende durch diese Bewegung aus dem Verschließbereich verdrängt wird. Es ist deshalb gleichgültig, von welcher Seite her das Etikettenende in den Verschließbereich eingeführt wird. Wenn hingegen der zu verschließende Strang durch eine Bewegung in den Verschließbereich gelangt, die in seiner Längsrichtung oder mit einer Längskomponente verläuft, sollte das Etikett den Verschließbereich von derselben Seite her wie der Strang dem Verschließbereich zugeführt sein.

Zweckmäßigerweise wird ein quasi endloses Etikettenband verwendet und weist die Etikettenführung eine Schneideinrichtung auf, die das jeweils verwendete Etikett von dem Band abschneidet. Dies vereinfacht nicht nur die Zuführung, sondern ermöglicht es auch, das jeweils verwendete Etikett bis kurz vor dem Verschließvorgang oder gewünschtenfalls noch während dessen festzuhalten, indem der Schnitt so gesteuert wird, daß er kurz vor, während, oder kurz nach dem Verschließvorgang stattfindet. Solange das Etikett mit dem Etikettenband verbunden bleibt, ist es nämlich unter den bei der Zuführung des Strangs und beim Verschließvorgang auftretenden Kräften kaum denkbar, daß das Etikett unbeabsichtigt aus der Führung herausgezogen oder in diese hinein zurückgeschoben wird. Dieses Ziel kann erfindungsgemäß aber auch erreicht werden, ohne daß der Schnitt zeitlich in Bezug auf den Verschließvorgang genau gesteuert wird, nämlich dadurch, daß der Schnitt unvollkommen geführt wird, so daß das Etikett noch über einen schwachen Steg mit dem Etikettstreifen verbunden ist. Dies ermöglicht es, den Schnitt vor Vollendung des Etikettvorschubs durchzuführen, ohne daß die Gefahr besteht, daß das Etikett und das diesem folgende Etikettenband sich in der Etikettenführung übereinanderschieben. Zweckmäßigerweise ist die Festigkeit dieses Stegs so bemessen, daß das Etikett nicht durch irgendwelche zufälligen Kräfte aus der vorgesehenen Position entfernt wird, daß der Steg aber spätestens beim Entnehmen des verschlossenen Strangs aus dem Verschließbereich leicht durchreißt. Dies kann auch schon während des Verschließvorgangs oder beim Einführen des Strangs in den Verschließbereich erfolgen.

Das Etikett kann mit dem kurzen oder seinem langen Ende voran in den Verschließbereich eingeführt werden. Oftmals ist ersteres vorzuziehen, weil die Stellung des freien Etikettenendes im Verschließbereich und die Führung des Etiketts um so stabiler ist, je kürzer das freie Ende des Etiketts ist. Dies erreicht man dadurch, daß der Abstand der Schneideinrichtung von dem Verschließbereich (gemessen entlang der Etikettenführung) größer ist als die Hälfte der Etikettenvorschubstrecke, die der Etikettenlänge entspricht. Das freie Ende soll dann in der Regel möglichst kurz und nur so lang sein, daß der Einschluß in die Verschlußklammer sichergestellt ist. Das jeweils mit dem Verschluß eingebundene Etikett befindet sich dann mit dem größeren Teil seiner Länge noch in der Etikettenführung und wird erst durch die Entfernung des verschlossenen Strangs aus dieser Führung herausgezogen. Dies hat den Vorteil, daß beim Herausziehen des Etiketts gleichzeitig irgendwelche Verschmutzungen abgestreift werden, die in der Etikettenführung in deren Mündungsbereich im Zusammenhang mit dem Verschlußvorgang angefallen sein mögen. Die Einrichtung ist somit selbstreinigend, und Störungen aufgrund von Verschmutzungen der Etikettenführung sind äußerst unwahrscheinlich.

Aus hygienischen Gründen bei Lebensmittelverarbeitung sowie auch aus Gründen der Praktikabilität sollte die Etikettenführung in der Nachbarschaft des Verschließbereichs praktisch nicht in Erscheinung treten. Dies erreicht man erfindungsgemäß dadurch, daß die Etikettenführung parallel zu den den Verschließbereich bildenden, plattenförmigen Teilen der Vorrichtung verläuft und kurz vor dem Verschließbereich eine Umlenkung vorgesehen ist. Insbesondere kann die Führung zwischen einer an der Bildung des Verschließbereichs beteiligten Platte und einer benachbarten Platte verlaufen, wobei die Umlenkung von einer dieser Platten gebildet ist. Es ist aber statt dessen auch möglich, die Etikettenführung anders anzuordnen, beispielsweise geradlinig (ohne Umlenkung) schräg zum Verschließbereich hinführend.

Bei der sogenannten Rollverformung der Drahtklammern, bei der die Klammerenden in Längsrichtung des Strangs hintereinander zu liegen kommen, verwendet man mitunter Klammerführungen, bei denen die von den gegenüberliegenden Führungsnuten bestimmte Führungsebene nicht parallel zu der Platte bzw. den Platten liegt, die den Verschließbereich enthalten, sondern geneigt dazu. In einem solchen Fall ist es zweckmäßig, wenn die Führungsebene in der Richtung geneigt ist, in welcher die Normale zu dieser Ebene zur Mündung der Etikettenführung hin geneigt ist. Sichere Einführung des Etikettenendes in den Verschließbereich wird dann nämlich schon bei geringerer Umlenkung des Etiketts erzielt.

In manchen Fällen ist benachbart dem Verschließbereich ein Messer zum Abschneiden des verschlossenen Strangs vorgesehen. Zweckmäßigerweise ist die Mündung der Etikettenführung in einem solchen Fall in einem Bereich vorgesehen, der sich zwischen dem Verschließbereich und der Wirkebene des Messers befindet.

Die Erfindung kann auch bei sogenannten Doppelclippern verwendet werden, bei denen gleichzeitig zwei Verschlußklammern in einem gewissen Längsabstand an demselben Strang gesetzt werden. Die Mündung der Etikettenführung kann sich auch in einem solchen Fall zwischen den beiden Verschließbereichen befinden, wobei das einzuclippende Etikettenende nach außen gerichtet ist. Sie kann aber auch außerhalb beider Verschlußbereiche liegen, wobei das einzuclippende Etikettenende nach innen gerichtet ist.

Die Erfindung wird im folgenden näher unter Bezugnahme auf die Zeichnung erläutert, die ein vorteilhaftes Ausführungsbeispiel veranschaulicht. Darin zeigen:
- Fig.1: ein Wurstende mit Etikett
- Fig.2 und 3: schematische Seitenansichten zweier Verschließvorrichtungen, an denen die Erfindung angewendet werden kann,
- Fig.4: einen Horizontalschnitt, der wesentliche Teile der erfindungsgemäßen Einrichtung zeigt und
- Fig. 5 bis 8: Teil-Seitenansichten einer erfindungsgemäßen Vorrichtung in unterschiedlichen Funktionsstadien

Die Hülle einer Wurst 1 ist am Ende zu einem Strang 2 zusammengefaßt , der mittels einer Drahtklammer 3 verschlossen ist. In die Klammer einbezogen und davon festgehalten ist ein Etikett 4, dessen kürzeres Ende 5 auf der einen und dessen längeres Ende 6 auf der anderen Seite der Klammer 3 liegt.

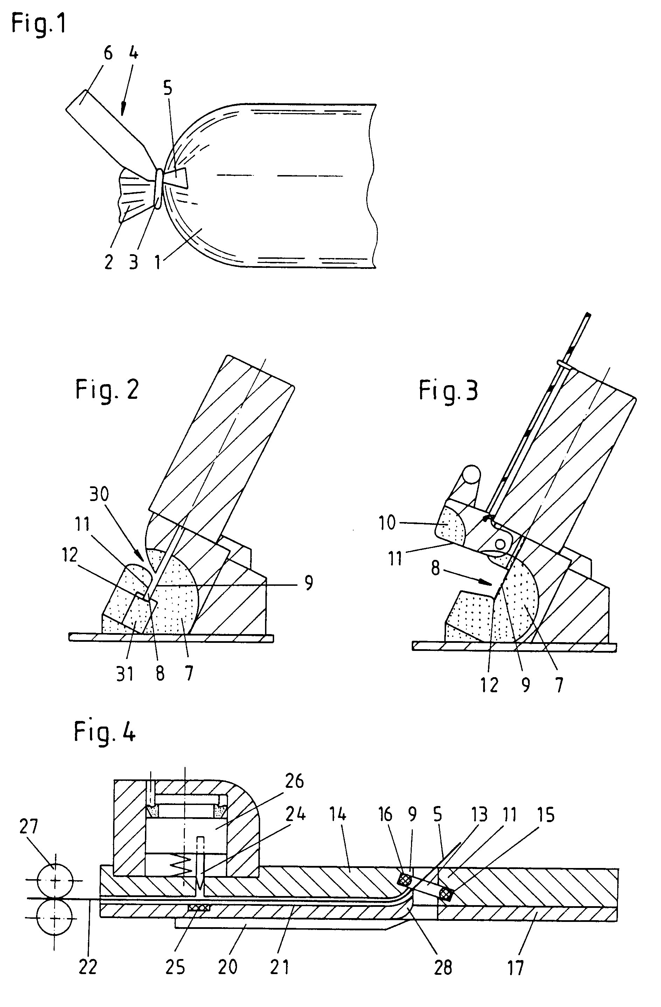

Die in Fig.2 dargestellte Maschine repräsentiert einen bekannten Typ. Die Schloßplatte 7 enthält einen schlitzförmigen Ausschnitt 8, der durch eine Öffnung 30 zugänglich ist. Sein hinterer Rand 9 und sein vorderer Rand 11 halten je eine Führungsnut für die beiden Schenkel einer U-förmigen Drahtkammer und den die Klammer vortreibenden Stempel. Am unteren Ende des Ausschnitts 8 ist eine Matrize 12 vorgesehen. Wird die Klammer mit dem offenen Ende voran vom Stempel gegen die Matrize 12 getrieben, so werden die Schenkel umgebogen, um einen zwischen den Rändern 9 und 11 sowie der Matrize 12 befindlichen Strang 2 zur Bildung einer Klammer 3 zu umschließen. Die Öffnung zwischen den Rändern 9, 11 und der Matrize 12 bildet den Verschließbereich, der in Fig.4 mit der Bezugsziffer 13 bezeichnet ist.

Soll ein Strang verschlossen werden, bei dem es sich um das offene Ende eines Verpackungsbeutels oder einer Wursthülle handeln kann, das zuvor von Hand oder mit einer geeigneten Vorrichtung zusammengerafft wurde, wird dieser Strang durch die Öffnung 30 in den schlitzförmigen Ausschnitt 8 eingeführt. Da die Entnahme des verschlossenen Strangs durch die enge Öffnung 30 mühsam sein kann, ist am unteren Ende des Ausschnitts 8 eine Klappe 31 vorgesehen, durch die der Bereich des Ausschnitts 8, in welchem sich der verschlossene Strang befindet, zur Seite hin weit geöffnet werden kann. Sie wird durch Federkraft in die geschlossene Stellung gedrückt. Durch Zug an dem verschlossenen Strang kann dieser herausgezogen werden, während sich die Klappe 31 gegen Federkraft öffnet.

Die Maschinenausführung gemäß Fig. 3 unterscheidet sich von derjenigen gemäß Fig. 2, daß der Rand 11 des Ausschnitts 8 an einer beweglichen Rafferplatte 10 angeordnet ist, die im geöffneten Zustand gezeigt ist. Sie kann in den Ausschnitt 8 hineingeklappt werden, so daß er bis auf den in Fig. 2 erkennbaren Schlitz 8 geschlossen ist. Nach dem Verschließen eines Strangs wird die Rafferplatte 10 geöffnet und der Strang durch den sich dann weit öffnenden Ausschnitt 8 entnommen.

In Fig. 4 ist eine durchgehende Schloßplatte 14 gezeigt. Jedoch gilt die gezeichnete Anordnung nicht nur für die Ausführung gemäß Fig. 2 sondern auch für die in Fig. 3 dargestellte Vorrichtung, wenn deren Schloßplatte 10 geschlossen ist. Die Klappe 31 wurde in Fig. 4 einfachtsheitshalber weggelassen.

Die den Verschließbereich 13 eingrenzenden Ränder 9, 11 enthalten Nuten 15, 16 als Klammer- und Stempelführungen. Die Schenkel einer Klammer sind darin im Schnitt schraffiert angedeutet.

Neben der Schloßplatte 14 befindet sich eine Platte 17, die an der Bildung einer Führung für ein bei 20 schematisch angedeutetes Messer beteiligt sein kann und deswegen als Messerblech bezeichnet wird. Das Messer 20 dient zum Abschneiden eines verschlossenen Stranges. Es ist mit einem geeigneten Antrieb verbunden, der im vorliegenden Zusammenhang nicht von Interesse und daher nicht dargestellt ist. Jenseits des Messerblechs 17 kann eine weitere Schloßplatte mit zugehörigen Verschließorganen vorgesehen sein, um einen Strang an einer zweiten, gegenüber dem Verschließbereich 13 versetzten Stelle zu verschließen.

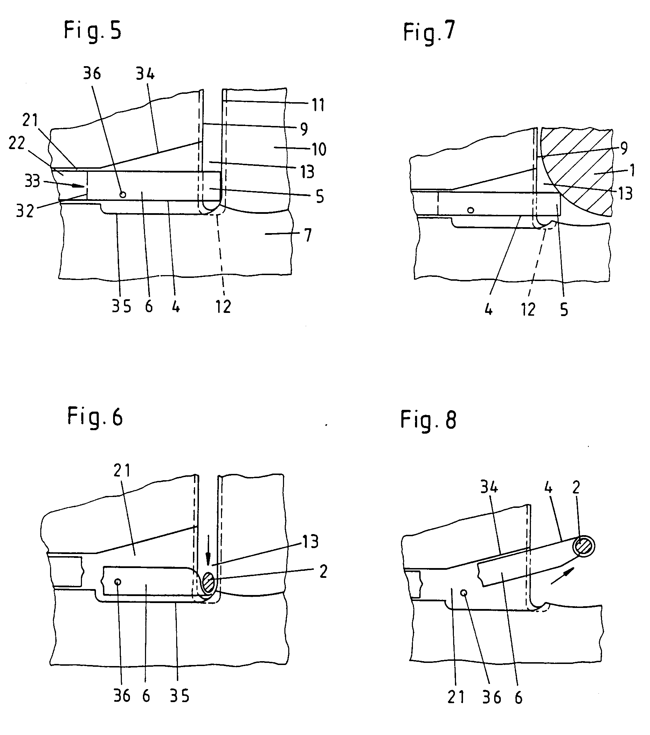

Zwischen dem Messerblech 17 und der Schloßplatte 14 ist ein Führungskanal 21 für einen Etikettstreifen 22 eingelassen, der parallel zur Schloßplatte 14 verläuft und erst an seinem im Verschließbereich 13 mündenden Ende 28 um etwa 45° umgelenkt ist, so daß das freie Ende 5 des Etikettstreifens 22 durch den Verschließbereich 13 zur freien Seite der Schloßplatte 14 hin hindurchtritt. Der Führungskanal 21 ist in die Schloßplatte 14 flach eingefräst und durch das Messerblech abgedeckt. Er ist in Fig. 5 - 8 nach Abnahme des Messerblechs gezeigt.

Man erkennt in Fig.4, daß die von den Nuten 15, 16 gebildete Klammerführung nicht lotrecht zur Längsrichtung des Verschließbereichs 13, sondern ein wenig geneigt dazu verläuft, wobei die Klammerführungsachse (das ist die Senkrechte auf die Mitte der die Klammerführung enthaltenden Ebene im Verschließbereich 13) so geneigt ist, daß sie sich der Richtung des austretenden Etikettenendes 5 annähert.

In einem der Länge des Abschnitts 6 des Etiketts 4 entsprechenden Abstand vom Verschließbereich 13 ist an dem Führungskanal 21 eine Schneidvorrichtung angeordnet, die ein Messer 24 umfaßt, das quer zum Führungskanal 21 mit einem auf dessen anderen Seite angeordneten, nachgiebigen Widerlager 25 zum Abschneiden des Etikettenbands 22 zusammenwirkt. Zu seinem Antrieb ist ein pneumatisch gegen Federkraft betätigter Kolben 26 angedeutet.

Das Band 22 hat man sich als einen Streifen von vorzugsweise konstanter Breite aus einem beispielsweise textil- oder papierartigen Flachmaterial vorzustellen, das hinreichend steif ist, um von einem Vorschuborgan, das als Rollenpaar 27 dargestellt ist, durch den Führungskanal 21 hindurch vorgeschoben werden zu können.

Der Vorschubantrieb ist derart gesteuert, daß der Vorschub jeweils dann stattfindet, wenn der Verschließbereich 13 mit hinreichender Sicherheit frei ist. Zu diesem Zweck kann ein besonderer Sensor vorgesehen sein. Statt dessen kann der Vorschub auch jeweils dann stattfinden, wenn soeben ein verschlossener Strang dem Verschließbereich 13 entnommen worden ist. Feststellbar ist dies beispielsweise durch die Öffnungsbetätigung des Rafferblechs 10, sofern dieser mit einem Auswerfer zwangsverbunden ist, oder durch Betätigung der Klappe 31, die sich gegen Federkraft öffnet, wenn das verschlossene Strangende herausgezogen wird. In anderen Fällen kann der geeignete Zeitpunkt in einer vorbestimmten Phase des automatisch gesteuerten Betriebsablaufs gewählt werden. Eine besondere Sensoranordnung wird unter Bezugnahme auf Fig. 5 - 8 beschrieben.

Fig. 5 zeigt den Zustand, in welchem das Etikett 4 verschließbereit ist. Sein hinteres, längeres Ende 6 liegt in dem Führungskanal 21. Sein vorderes, freies Ende 5 liegt im Verschließbereich 13 nahe der Matrize 12 und ungefähr dort, wo anschließend der Strang sich während des Verschließens befindet. Von dem Rest 22 des Bandes ist das Etikett 4 durch einen Schnitt 32 getrennt, der in der Mitte unterbrochen ist, so daß ein schmaler Verbindungssteg 33 zwischen dem Etikett 4 und dem durch die Vorschubmittel 27 festgehaltenen Teil des Bandes 22 verbleibt. Dadurch kann das Etikett 4 noch nach dem Schnitt vorgeschoben werden, ohne daß das Etikett 4 und der sich anschließende Teil des Bandes 22 sich übereinanderschieben. Auch wird das Etikett in der in Fig. 5 gezeigten Stellung festgehalten, solange keine Kräfte wirken, die größer als die Festigkeit des Stegs 33 sind.

Der Führungskanal 21 ist in seinem dem Verschließbereich 13 nahen Teil durch eine schräg nach oben verlaufende Kante 34 und eine nach unten versetzte Kante 35 erweitert. Dadurch ist dem Etikett 4 Bewegungsfreiheit nach unten und oben während des Verschließens und während des Entnehmens gegeben. Gleichwohl hat sein freies Ende 5 in der verschließbereiten Stellung gemäß Fig. 5 eine stets gleichbleibende Lage innerhalb des Verschließbereichs 13.

Wird nun gemäß Fig. 6 ein Strang 2 in den Verschließbereich geführt, so kommt er mit dem freien Ende 5 des Etiketts 4 in Kontakt. Sowohl der Strang 2 als auch das Etikettende 5 liegen dann benachbart im Verschließbereich 13 und können gemeinsam von einer Verschlußklammer erfaßt werden. Es ergibt sich dann die Situation, die in Fig. 6 dargestellt ist. Durch die Stempel- und Klammerpressung sind Strang 2 und Etikett im Verschließbereich 13 in Pfeilrichtung nach unten geschoben worden. Das hintere Etikettenende 6 ist von dem in der Etikettführung festgehaltenen Etikettenband 22 abgerissen und kann daher dieser Bewegung dank der Ausweitung des Führungskanals 21 nach unten folgen.

Wird der Verschließbereich 13 nun gemäß Fig. 8 geöffnet, in dem der Teil 10 weggeklappt wird, kann der Strang 2 mit dem Etikett 4 in Pfeilrichtung entnommen werden. Der in der Etikettenführung 21 befindliche, hintere Teil 6 des Etiketts kann der Bewegung ohne weiteres folgen, obwohl sie mehr oder weniger nach oben gerichtet ist, weil der Etikettenkanal 21 bei seiner Kante 34 nach oben erweitert ist.

Im Führungskanal 21 befindet sich eine kleine Querbohrung 36, die an eine Druck- oder Saugluftleitung angeschlossen ist. Sie ist an einer Stelle angeordnet, an der sich bis zur Entnahme des Strangs 2 aus dem Verschließbereich (Fig. 8) mit Sicherheit das hintere Ende 6 des Etiketts 4 befindet. Solange dies der Fall ist, ist die Luftströmung durch die Bohrung 36 behindert. Wird der verschlossene Strang mit dem Etikett 5 jedoch entnommen, wird die Bohrung 36 frei; der Luftstrom ist nicht mehr behindert. Der Unterschied zwischen den beiden Zuständen kann durch einen Drucksensor leicht festgestellt werden.

Wenn dieser Drucksensor die Entnahme des Strangs und des Etiketts anzeigt, kann angenommen werden, daß der Verschließbereich 13 frei ist. Eine geeignete Steuerungsvorrichtung veranlaßt daher nach dem Eingang dieses Signals die Bewegung der Vorschubrollen 27 und danach die Betätigung der Schneidvorrichtung 24, 26, bis der Zustand gemäß Fig. 5 wiederhergestellt ist.

Der Verschließbereich 13 ist im Sinne der Erfindung auch dann als frei zu betrachten, wenn sich ein mit der Vorrichtung zu behandelnder Gegenstand, beispielsweise ein Wurstkörper 1, in der Nähe befindet, aber noch nicht im eigentlichen Verschließbereich 13 angekommen ist. Im Beispiel gemäß Fig. 7 ist der Wurstkörper 1 an derjenigen Stelle, an der er verschlossen werden soll, noch nicht strangförmig zusammengerafft. Sein großer Umfang verhindert es deshalb, daß er in die Tiefe des Verschließbereichs 13 eintritt. Daher ist dieser frei. Wird nun der Wurstkörper 1 ohne wesentliche axiale Bewegung an dieser Stelle zu einem Strang gerafft, bewegt er sich quer zu seiner Längserstreckung in den Verschließbereich 13 hinein. Dabei kann er das freie Ende 5 des Etiketts 4 nicht aus dem Verschließbereich verdrängen. Vielmehr wird das freie Ende 5 des Etiketts zwischen dem Strang und dem Rand 9 des Verschließbereich oder der Matrize 12 in einer Stellung eingeklemmt, die für den Verschlußvorgang geeignet ist. Falls an dem zu verschließenden Strang auch eine Längsbewegung stattfindet, wenn dieser sich in dem Verschließbereich 13 befindet oder sich in den Verschließbereich hineinbewegt, sollten der Führungskanal 21 und dessen Mündungskrümmung 28 so angeordnet sein, daß die Richtung der Strangbewegung und die Richtung, in der das freie Etikettende in den Verschließbereich eintritt, übereinstimmen.

Wichtig ist, daß sich das freie Etikettende im Verschließbereich befindet, bevor der zu verschließende Strang diesen Bereich und damit das freie Etikettende erreicht. Weil somit das Etikettende der Stelle, an der der Verschluß stattfindet, von vornherein sehr nahe ist und sein hinteres Ende durch die Etikettführung gehalten ist, besteht keine Gefahr, daß es sich zufällig aus der Position entfernt, in der es korrekt in den Verschluß eingebunden werden kann. Außerdem vollzieht sich der Kontakt zwischen dem freien Etikettende und dem Strang unter Bedingungen, die eine kräftige Reibhaftung zwischen diesen Teilen begründen, so daß das freie Etikettende an dem zu verschließenden Bereich des Strangs festgehalten wird.

## Patentansprüche

1. Verfahren zum Einbinden eines Etiketts in den Verschluß des Strangs beim Verschließen des gerafften Strangs einer Verpackungshülle unter Verwendung einer einen Verschließbereich in Form eines von außen zugänglichen schlitzförmigen Ausschnittes und eine Etikettenführung bildenden Verschließvorrichtung, dadurch gekennzeichnet, daß das einzubindende Ende des Etiketts zeitlich vor dem Strang in den Verschließbereich eingeführt wird, während sein hinteres Ende in der Etikettenführung gehalten wird.

2. Verfahren nach Anspruch 1, dadurch gekennzeichnet, daß das hintere Ende des Etiketts erst nach dem Verschließvorgang aus der Etikettenführung gezogen wird.

3. Verfahren nach Anspruch 1 oder 2, dadurch gekennzeichnet, daß der zu verschließende Strang quer zu seiner Längserstreckung in den Verschließbereich bewegt wird.

4. Verfahren nach Anspruch 1 oder 2, dadurch gekennzeichnet, daß der zu verschließende Strang mit einer Längsbewegungskomponente in den Verschließbereich bewegt wird und das Etikett von derselben Seite her wie der Strang zugeführt wird.

5. Verfahren nach einem der Ansprüche 1 bis 4, dadurch gekennzeichnet, daß das Etikett während des Einführens des Strangs in den Verschließbereich mit einem Etikettenband, von dem es abzutrennen ist, verbunden ist.

6. Verfahren nach Anspruch 5, dadurch gekennzeichnet, daß das Etikett auch während des Verschließvorgangs mit dem Etikettenband verbunden ist.

7. Verfahren nach Anspruch 5 oder 6, dadurch gekennzeichnet, daß das Etikett nur über einen schmalen Steg mit dem Etikettenband verbunden ist.

8. Vorrichtung zum Einbinden eines Etiketts (4) in den Verschluß beim Verschließen des gerafften Strangs (2) einer Verpackungshülle (1), die einen den zu verschließenden Strang (2) aufnehmenden, an mindestens drei Seiten geschlossenen bzw. schließbaren Verschließbereich (13) in Form eines von außen zugänglichen schlitzförmigen Ausschnittes sowie eine mit Vorschub- und Haltemitteln (27) ausgerüstete Etikettenführung (21) umfaßt, dadurch gekennzeichnet, daß die Etikettenführung (21) und deren Vorschub- und Haltemittel (27) so gesteuert und ausgebildet sind, daß der Etikettvorschub dann stattfindet, wenn der Verschließbereich (13) frei ist, und daß ein vorgeschobenes, verschließbereites Etikett mit seinem freien Ende (5) im Verschließbereich (13) und mit seinem hinteren Ende (6) in der Etikettenführung (21) liegt.

9. Vorrichtung nach Anspruch 8, dadurch gekennzeichnet, daß der Verschließbereich (13) eine Führung (15, 16) für eine Verschlußklammer enthält und der Mündungsbereich der Etikettenführung (21) in Richtung der Klammerführung (15, 16) eine die Breite des Etiketts (4) wesentlich übersteigenden Weite (zwischen Kanten 34, 35) hat.

10. Vorrichtung nach Anspruch 8 oder 9, dadurch gekennzeichnet, daß der Verschließbereich (13) mit einem die Abwesenheit oder die Entnahme des Strangs (2) signalisierenden Sensor (Bohrung 36) ausgerüstet ist.

11. Vorrichtung nach Anspruch 10, dadurch gekennzeichnet, daß der die Anwesenheit oder Entnahme eines Strangs (2) signalisierende Sensor (Bohrung 36) zur Feststellung der Anwesenheit bzw. Entnahme des hinteren Endes (6) des Etiketts (4) in der Etikettenführung (21) ausgebildet ist.

12. Vorrichtung nach Anspruch 8, dadurch gekennzeichnet, daß die Vorschubmittel bei Anschluß der Vorrichtung an eine Füllvorrichtung selbsttätig in einer Betriebsphase angesteuert sind, in der der Verschließbereich (13) strangfrei ist.

13. Vorrichtung nach einem der Ansprüche 8 bis 12, dadurch gekennzeichnet, daß bei Längsbewegung des Strangs im Verschließbereich (13) das Etikett von derselben Seite her wie der Strang dem Verschließbereich zuführbar ist.

14. Vorrichtung nach einem der Ansprüche 8 bis 13, dadurch gekennzeichnet, daß ein quasi endloses Etikettenband (22) vorgesehen ist und die Etikettenführung (21) eine Schneideinrichtung (24) aufweist.

15. Vorrichtung nach Anspruch 14, dadurch gekennzeichnet, daß die Schneideinrichtung (24) für einen unvollkommenen, einen schwachen Verbindungssteg (33) belassenden Schnitt (32) eingerichtet ist.

16. Vorrichtung nach einem der Ansprüche 8 bis 15, dadurch gekennzeichnet, daß der Abstand der Schneideinrichtung (24) vom Verschließbereich (13) größer ist als die Hälfte der Etikettenvorschubstrecke.

17. Vorrichtung nach einem der Ansprüche 8 bis 16, dadurch gekennzeichnet, daß die Etikettenführung (21) hauptsächlich parallel zu den den Verschließbereich (13) bildenden plattenförmigen Teilen (14) verläuft und kurz vor dem Verschließbereich (13) eine Umlenkung (28) vorgesehen ist.

18. Vorrichtung nach einem der Ansprüche 8 bis 17, dadurch gekennzeichnet, daß bei Verwendung einer zur Ebene der den Verschließbereich (13) bildenden Platten (14) geneigt verlaufenden Klammerführung (15, 16), diese zur Mündung der Etikettenführung hin geneigt ist.

## Claims

1. A method of tying a label into the closure of a strand when closing the shirred strand of a packaging wrapper using a closing device forming a closure zone in the form of a slot-like opening accessible from outside and forming a label guide, characterised in that the end of the label to be tied in is introduced into the closure zone before the strand, whereas its rear end is retained in the label guide.

2. A method according to Claim 1, characterized in that the rear end of the label is drawn from the label guide only after the closing procedure.

3. A method according to Claim 1 or 2, characterised in that the strand to be closed is moved into the closure zone transversely to its longitudinal extension.

4. A method according to Claim 1 or 2, characterised in that the strand to be closed is moved into the closure zone with a longitudinal movement component and the label is fed from the same side as the strand.

5. A method according to any one of Claims 1 to 4, characterised in that during the introduction of the strand into the closure zone the label is connected to a label strip from which it is to be separated.

6. A method according to Claim 5, characterised in that the label is connected to the label strip also during the closing procedure.

7. A method according to Claim 5 or 6, characterized in that the label is connected to the label strip only via a narrow web.

8. An apparatus for tying a label (4) into the closure when closing a shirred strand (2) of a packaging wrapper (1), which comprises a closure zone (13) in the form of a slot-like opening accessible from outside, which closure zone is closed or can be closed on at least three sides and which receives the strand (2) to be closed, and a label guide (21) provided with feed and support means (27), characterised in that the label guide (21) and its feed and support means (27) are controlled and designed so that the label feed takes place when the closure zone (13) is free, and in that a label, which has been fed and is ready to be closed, is situated with its free end (5) in the closure zone (13) and with its rear end (6) in the label guide (21).

9. An apparatus according to Claim 8, characterised in that the closure zone (13) includes a guide (15,16) for a closure clip and in the direction of the clip guide (15,16) the outlet zone of the label guide (21) has a width (between edges 34,35) substantially exceeding the width of the label (4).

10. An apparatus according to Claim 8 or 9, characterized in that the closure zone (13) is provided with a sensor (bore 36) signalling the absence or withdrawal of the strand (2).

11. An apparatus according to Claim 10, characterized in that the sensor (bore 36) signalling the presence or withdrawal of the strand (2) is designed to determine the presence or withdrawal of the rear end (6) of the label (4) in the label guide (21).

12. An apparatus according to Claim 8, characterized in that when the apparatus is connected to a filling device the feed means are automatically activated in an operating stage in which the closure zone (13) is strand-free.

13. An apparatus according to any one of Claims 8 to 12, characterised in that upon longitudinal movement of the strand in the closure zone (13) the label can be fed to the closure zone from the same side as the strand.

14. An apparatus according to any one of Claims 8 to 13, characterised in that a virtually endless label strip (22) is provided and the label guide (21) has a cutting means (24).

15. An apparatus according to Claim 14, characterised in that the cutting means (24) is set for an incomplete cut (32) leaving a weak connecting web (33).

16. An apparatus according to any one of Claims 8 to 15, characterised in that the distance of the cutting means (24) from the closure zone (13) is greater than half the label feed distance.

17. An apparatus according to any one of Claims 8 to 16, characterized in that the label guide (21) extends substantially parallel to the plate-like parts (14) forming the closure zone (13) and a deflection (28) is provided just before the closure zone (13).

18. An apparatus according to any one of Claims 8 to 17, characterised in that when using a clip guide (15,16) extending inclined to the plane of the plates (14) forming the closure zone (13) said clip guide is inclined towards the outlet of the label guide.

## Revendications

1. Procédé pour enlier une étiquette dans la fermeture du boyau, lors de l'opération de fermeture du boyau serré d'une gaine d'emballage avec utilisation d'un dispositif de fermeture formant une zone de fermeture, se présentant sous la forme d'une découpe en forme de fente accessible depuis l'extérieur, et un guidage à étiquette, caractérisé en ce que l'extrémité à enlier de l'étiquette est introduite dans la zone de fermeture temporellement avant le boyau, tandis que son extrémité arrière est maintenue dans le guidage à étiquette.

2. Procédé selon la revendication 1, caractérisé en ce que l'extrémité arrière de l'étiquette est tirée ensuite hors du guidage à étiquette après déroulement du processus de fermeture.

3. Procédé selon la revendication 1 ou 2, caractérisé en ce que le boyau à fermer est déplacé transversalement par rapport à son étendue longitudinale, dans la zone de fermeture.

4. Procédé selon la revendication 1 ou 2, caractérisé en ce que le boyau à fermer est déplacé dans la zone de fermeture avec une composante de déplacement longitudinale et l'étiquette est amenée depuis le même côté que le boyau.

5. Procédé selon l'une quelconque des revendications 1 à 4, caractérisé en ce que, pendant l'introduction du boyau dans la zone de fermeture, l'étiquette est reliée à un ruban à étiquettes d'où elle est séparée.

6. Procédé selon la revendication 5, caractérisé en ce que l'étiquette est également reliée au ruban à étiquettes pendant le processus de fermeture.

7. Procédé selon la revendication 5 ou 6, caractérisé en ce que l'étiquette n'est reliée au ruban à étiquettes que par une étroite languette.

8. Dispositif pour enlier une étiquette (4) dans la fermeture, lors de l'opération de fermeture du boyau serré (2) d'une gaine d'emballage (1), comprenant une zone de fermeture (13) qui reçoit le boyau à fermer (2), fermée ou susceptible d'être fermée sur au moins trois cotés et réalisée sous la forme d'une découpe en forme de fente accessible depuis l'extérieur, ainsi qu'un guidage à étiquette (21) équipé de moyens d'avancement et de maintien (27), caractérisé en ce que le guidage à étiquette (21) et ses moyens d'avancement et de maintien (27) sont commandés et réalisés de manière que l'avancement de l'étiquette se produise lorsque la zone de fermeture (13) est libre, et en ce qu'une étiquette, ayant été avancée et prête à la fermeture, est située, par son extrémité libre (5), dans la zone de fermeture (13) et, par son extrémité arrière (6), dans le guidage à étiquette (21).

9. Dispositif selon la revendication 8, caractérisé en ce que la zone de fermeture (13) contient un guidage (15, 16) destiné à une chambre de fermeture et la zone d'embouchure du guidage à étiquette (21) a, dans la direction du guidage à pince (15, 16), une dimension (entre les arêtes 34, 35) notablement supérieure à la largeur de l'étiquette (4).

10. Dispositif selon la revendication 8 ou 9, caractérisé en ce que la zone de fermeture (13) est équipée d'un capteur (perçage 36) qui signale l'absence ou le prélèvement du boyau (2).

11. Dispositif selon la revendication 10, caractérisé en ce que le capteur (perçage 36) signalant la présence ou le prélèvement d'un boyau (2) est réalisé pour constater la présence ou le prélèvement de l'extrémité arrière (6) de l'étiquette (4) dans le guidage à étiquette (21).

12. Disposition selon la revendication 8, caractérisé en ce que les moyens d'avancement, en cas de raccordement à un dispositif de remplissage, sont commandés automatiquement pour passer en une phase de fonctionnement dans laquelle la zone de fermeture (13) ne contient pas de boyau.

13. Dispositif selon l'une quelconque des revendications 8 à 12, caractérisé en ce que, en cas de déplacement longitudinal du boyau dans la zone de fermeture (13), l'étiquette est susceptible d'être amenée au dispositif de fermeture depuis le même côté que le boyau.

14. Dispositif selon l'une quelconque des revendications 8 à 13, caractérisé en ce qu'est prévu un ruban à étiquettes (22) quasi continu et le guidage à étiquette (21) présente un dispositif de découpage (24).

15. Dispositif selon la revendication 14, caractérisé en ce que le dispositif de découpage (24) est équipé pour effectuer une découpe (32) incomplète, laissant subsister une nervure de liaison (33) à faible résistance.

16. Dispositif selon l'une quelconque des revendications 8 à 15, caractérisé en ce que l'espacement entre le dispositif de découpage (24) et la zone de fermeture (13) est supérieur à la moitié de la course d'avancement de l'étiquette.

17. Dispositif selon l'une quelconque des revendications 8 à 16, caractérisé en ce que le guidage à étiquette (21) s'étend principalement parallèlement aux parties (14) en forme de plaque qui constituent la zone de fermeture (13) et un détournement (28) est prévu peu avant la zone de fermeture (13).

18. Dispositif selon l'une quelconque des revendication 8 à 17, caractérisé en ce que, en cas d'utilisation d'un guidage à pince (15, 16), s'étendant de façon inclinée par rapport au plan des plaques (14) constituant la zone de fermeture (13), ce guidage est incliné par rapport à l'embouchure du guidage à étiquette.
